# EUROPÄISCHE PATENTSCHRIFT

(11) **EP 2 758 198 B1**
(45) Veröffentlichungstag und Bekanntmachung des Hinweises auf die Patenterteilung: **24.02.2016**
(21) Anmeldenummer: 12805564.7
(22) Anmeldetag: 17.09.2012
(51) Int. Cl.: B23B 29/034, B23C 5/24, B23D 77/04

(54) **WERKZEUGKASSETTE UND ZERSPANUNGSWERKZEUG MIT EINER WERKZEUGKASSETTE**
TOOL CASSETTE AND CUTTING TOOL WITH A TOOL CASSETTE
CASSETTE D'OUTIL ET OUTIL D'USINAGE PAR ENLÈVEMENT DE COPEAUX COMPORTANT UNE CASSETTE D'OUTIL

(30) Priorität: 19.09.2011 DE 102011082964
(43) Veröffentlichungstag der Anmeldung: 30.07.2014
(73) Patentinhaber: Gühring KG, 72458 Albstadt (DE)
(72) Erfinder: MATHEIS, Klaus, 88605 Sauldorf/Rast (DE)
(74) Vertreter: Winter, Brandl, Fürniss, Hübner, Röss, Kaiser, Polte - Partnerschaft mbB
(86) Internationale Anmeldenummer: PCT/DE2012/000916
(87) Internationale Veröffentlichungsnummer: WO 2013/041075

(56) Entgegenhaltungen:
- EP-A1- 2 288 459

## Beschreibung

Die Erfindung betrifft eine Werkzeugkassette nach dem Oberbegriff des Anspruchs 1 sowie ein mit einer derartigen Werkzeugkassette bestücktes Zerspanungswerkzeug.

Eine derartige Werkzeugkassette ist beispielsweise aus der DE 102007009607 A1 bekannt. Diese Druckschrift zeigt und beschreibt im Besonderen ein Zerspanungswerkzeug mit einer an einem Trägerkörper einstellbar angebrachten Werkzeugkassette, die einen Schneideinsatz in Form einer Wendeschneideplatte trägt. Die Position der Werkzeugkassette am Trägerkörper lässt sich mit Hilfe eines Keilgetriebes einstellen, das zwischen der Werkzeugkassette und dem Trägerkörper wirkt und eine radiale und/oder axiale Justierung erlaubt. Die beweglichen Teile des Keilgetriebes sind am Trägerkörper untergebracht und geführt.

Die Unterbringung der beweglichen Teile des Keilgetriebes am Trägerkörper erfordert allerdings eine verhältnismäßig aufwändige Bearbeitung des Trägerkörpers. Dies wirkt sich insbesondere bei Werkzeugen mit einem verhältnismäßig kleinen Nenndurchmesser oder beispielsweise dann negativ aus, wenn der Trägerkörper aus einem besonders schwer zu zerspanende Material gefertigt ist.

Die EP 2 288 459 A1 offenbart eine Werkzeugkassette gemäß dem Oberbegriff des Anspruchs 1.

Die Erfindung hat die Aufgabe, ein Zerspanungswerkzeug bereitzustellen, das selbst bei einem verhältnismäßig kleinen Nenndurchmesser oder dann, wenn der Trägerkörper aus einem schwer zu zerspanenden Material gefertigt ist, wirtschaftlich bearbeiten lässt, gleichzeitig aber eine gewünschte Feineinstellung eines an der Werkzeugkassette gehaltenen Schneideinsatzes erlaubt.

Diese Aufgabe wird durch eine Werkzeugkassette mit den Merkmalen des Anspruchs 1 gelöst. Vorteilhafte oder bevorzugte Weiterbildungen sind Gegenstand abhängiger Ansprüche. Ein Zerspanungswerkzeug mit einer derartigen Werkzeugkassette ist Gegenstand des Anspruchs 12.

Die Erfindung geht aus von einer Werkzeugkassette mit einer Aufnahmetasche zur Aufnahme eines Schneideinsatzes, die mittels einer Klemmschraube, die durch eine die Werkzeugkassette durchsetzende Bohrung geführt ist, in einem Werkzeugkassettensitz eines Trägerkörpers eines Zerspanungswerkzeugs lagebestimmt fixierbar ist. Erfindungsgemäß ist die radiale Lage, axiale Lage und/oder Winkellage der Werkzeugkassette relativ zu einer Längsmittelachse des Trägerkörpers durch eine in die Werkzeugkassette integrierte Einstellvorrichtung einstellbar, die mit einer oder mehreren den Werkzeugkassettensitz begrenzenden Seitenwänden des Trägerkörpers zusammenwirkt.

Die erfindungsgemäße Werkzeugkassette ist wie in dem eingangs diskutierten Stand der Technik zur lagebestimmten Fixierung in einem Werkzeugkassettensitz eines Trägerkörpers eines Zerspanungswerkzeugs, z. B. einer Bohrstange oder dergleichen, konzipiert. Der Werkzeugkassettensitz ist daher wie üblich als eine umfangs- und stirnseitig offene Vertiefung oder Ausnehmung im Bereich des Spanraums des Trägerkörpers ausgebildet. Der Werkzeugkassettensitz ist beispielsweise als eine Vertiefung oder Ausnehmung im Trägerkörper ausgebildet, die in Schnittrichtung von einer Bodenwand und in axialer und radialer Richtung von jeweils einer Seitenwand begrenzt ist. Die Boden- und Seitenwände können zumindest in den Wandbereichen, in denen die Werkzeugkassette über die Einstellvorrichtung abgestützt ist, aus ebenen Flächen gebildet sein die rechtwinklig aufeinander stehen.

Im Unterschied zu der DE 10 2007 009 607 A1 ist die Einstellvorrichtung aber nicht trägerkörperseitig angeordnet sondern erfindungsgemäß (herausnehmbar) in die Werkzeugkassette integriert, d. h. die Einstellvorrichtung ist werkzeugkassettenseitig angeordnet. Erfindungsgemäß ist also zur Einstellung der Lage der Haupt- und/oder Nebenschneide(n) des an der Werkzeugkassette angeordneten Schneideinsatzes nicht der Schneideinsatz als solcher sondern die Werkzeugkassette mit dem Schneideinsatz gegenüber dem Trägerkörper verstellbar. Durch die werkzeugkassettenseitige Anordnung wirkt die Einstellvorrichtung daher von

der Werkzeugkassette zum Trägerkörper hin und zwar beispielsweise dergestalt, dass sie einen Druck gegen wenigstens eine der Seitenwände des Trägerkörpers, die den Werkzeugkassettensitz begrenzen, ausübt, um eine Lageeinstellung der Werkzeugkassette zu bewirken und die Werkzeugkassette im Werkzeugkassettensitz des Trägerkörpers lagebestimmt anzuordnen.

Dank der Integration der Einstellvorrichtung, d. h. sämtlicher Komponenten, in die Werkzeugkassette erfordert der Trägerkörper keinerlei in fertigungstechnischer oder geometrischer Hinsicht schwer zu realisierenden Bohrungen, Ausnehmung etc., um die verschiedenen Komponenten der Einstellvorrichtung am Zerspanungswerkzeug unterzubringen. Der Trägerkörper lässt sich daher verhältnismäßig einfach und wirtschaftlich bearbeiten und zwar auch dann, wenn das Zerspanungswerkzeug einen kleinen Nenndurchmesser hat oder der Trägerkörper aus einem besonders schwer zu zerspanenden Material gefertigt ist.

Grundsätzlich ist die Werkzeugkassette nicht auf eine bestimmte geometrische Gestaltung beschränkt. Die Werkzeugkassette ist bevorzugt aber aus einem prismatischen, im Besonderen quaderförmigen Körper gebildet, der die erforderlichen Bohrungen, Ausnehmungen oder dergleichen zur Integration sämtlicher Komponenten, die die Einstellvorrichtung bilden, aufweist. Ein prismatischer, im Besonderen quaderförmiger, Körper lässt sich in fertigungstechnischer Hinsicht relativ einfach bearbeiten. Ebenso bereitet die Ausbildung der für die Unterbringung der verschiedenen Komponenten der Einstellvorrichtung erforderlichen Ausnehmungen aufgrund der geometrisch einfachen Verhältnisse keine besonderen Schwierigkeiten. Die Werkzeugkassette hat allgemein eine Oberseite mit einer Aufnahmetasche für den Schneideinsatz, eine gegenüberliegende Unter- oder Bodenseite zur Abstützung an der Bodenwand des Werkzeugkassettensitzes sowie eine äußere und innere Längsseite und eine vordere und hintere Stirnseite. In einem Zustand, in dem die Werkzeugkassette an einem Trägerkörper angebracht ist, liegen die innere Längsseite und die hintere Stirnseite jeweils einer Seitenwand des Werkzeugkassettensitzes gegenüber, während die äußere Längsseite und die vordere Stirnseite jeweils freiliegen.

Erfindungsgemäß ist die Werkzeugkassette über die Einstellvorrichtung an wenigstens einer der Seitenwände des Werkzeugkassettensitzes abgestützt. Die Fixierung der Werkzeugkassette am Trägerkörper erfolgt nach vorgenommener Lageeinstellung mit Hilfe der Klemmschraube. Zum Zweck der Lageeinstellung wird die Werkzeugkassette zunächst mit Hilfe der Klemmschraube im Werkzeugkassettensitz locker befestigt. In diesem Zustand kann dann die gewünschte Lageeinstellung der Werkzeugkassette mittels der Einstellvorrichtung durchgeführt werden. Anschließend wird die Werkzeugkassette mit Hilfe der Klemmschraube in der so eingestellten Lage fixiert.

Erfindungsgemäß weist die Einstellvorrichtung des Weiteren einen oder mehrere Einstellkeile auf, die jeweils entlang einer definierten Verschiebeachse in einer an der Werkzeugkassette ausgebildeten Führung verschiebbar angeordnet sind und über eine Keilfläche mit einer jeweils gegenüberliegenden Seitenwand des Werkzeugkassettensitzes zusammenwirken. Die Keilfläche des Einstellkeils und die jeweils gegenüberliegende Seitenwand des Werkzeugkassettensitzes bilden ein Keilgetriebe, das eine feine Lageeinstellung der Werkzeugkassette im Werkzeugkassettensitz ermöglicht. Die Verschiebeachse des oder der Einstellkeile schneidet die jeweils gegenüberliegende Seitenwand des Werkzeugkassettensitzes dabei unter einem (dem Keilwinkel entsprechenden) spitzen Winkel.

Die Führung ist bevorzugt von einer zylindrischen Ausnehmung, im Besonderen einer kreiszylindrischen Ausnehmung, z. B. einer Bohrung, gebildet, die diejenige Seite der Werkzeugkassette unter einem (dem Keilwinkel entsprechenden) spitzen Winkel schneidet, die der gegenüberliegenden Seitenwand des Werkzeugkassettensitzes zugewandt ist. Dadurch wird an dieser Seite eine Öffnung geschaffen, die die Keilfläche des in der Ausnehmung geführten Einstellkeils freilegt.

Die Einstellkeile sind in der der jeweiligen Führungsausnehmung vorzugsweise formschlüssig aufgenommen, d. h. sie haben jeweils einen dem Querschnitt der Führungsausnehmung zumindest im Wesentlichen übereinstimmenden Querschnitt. Durch die formschlüssige Anordnung des Einstellkeils in der jeweiligen Ausnehmung wird eine zuverlässige, spielreduzierte Führung in der jeweiligen Ausnehmung erreicht.

Die Keilflächen der Einstellkeile sind vorteilhaft jeweils von einer ebenen Fläche gebildet, die an der jeweils gegenüberliegenden Seitenwand des Werkzeugkassettensitzes flächig anliegt. Durch die flächige Anlage der ebenen Keilfläche an der jeweiligen Seitenwand des Werkzeugkassettensitzes wird, ohne dass es einer weiteren Maßnahme bedarf, bereits eine Verdrehsicherung des Einstellkeils in der Ausnehmung bzw. relativ zu der gegenüberliegenden Seitenwand des Werkzeugkassettensitzes erreicht.

Durch die flächige Anlage des Verstellkeils an der gegenüberliegenden Seitenwand des Werkzeugkassettensitzes wird Im Unterschied zu einer punkt- oder linienförmigen Anlage eines beispielsweise konischen Einstellkeils wird darüber hinaus erreicht, dass relativ hohe Kräfte in den Trägerkörper übertragen werden können, ohne dass der Trägerkörper, die Werkzeugkassette und die Einstellvorrichtung beschädigt oder plastisch verformt werden.

Der Einstellkeil ist erfindungsgemäß aus einem in der Ausnehmung aufgenommenen Hülsenkörper gebildet ist, der mit Ausnahme der Keilfläche eine in Richtung der Verschiebeachse verlaufende zylindrische, im Besonderen kreiszylindrische, Mantelfläche hat. Über die zylindrische, im Besonderen kreiszylindrische, Mantelfläche lässt sich eine einfach zu realisierende formschlüssige Aufnahme des Hülsenkörpers in der jeweiligen zylindrischen, im Besonderen kreiszylindrischen, Ausnehmung sicherstellen.

In einer bevorzugten Ausführung hat der Hülsenkörper des Weiteren eine in Richtung der Verschiebeachse verlaufende, außermittig angeordnete Innengewindebohrung, in die eine in der Ausnehmung axialfest, aber drehbeweglich gehaltene Antriebsschraube eingeschraubt ist. Durch die in der Ausnehmung verankerte Antriebsschraube ist der Hülsenkörpers in der jeweiligen Führungsausnehmung verliersicher angeordnet. Durch die außermittige Anordnung der Innengewindebohrung des Hülsenkörpers und damit auch der in den Hülsenkörper eingeschraubten Antriebsschraube wird erreicht, dass sich der Einstellkeil beim Drehen der Antriebsschraube nicht mit der Antriebsschraube um die Längsmittelachse der jeweiligen Führungsausnehmung dreht. Der Einstellkeil ist daher in der jeweiligen Führungsausnehmung drehfest aber axial verschiebbar angeordnet. Über die Antriebsschraube lässt sich der Hülsenkörper entlang der definierten Verschiebeachse auf die jeweils gegenüberliegende Seitenwand des Werkzeugkassettensitzes zu bzw. von der jeweils gegenüberliegenden Seitenwand des Werkzeugkassettensitzes weg verstellen.

Hinsichtlich der axialfesten Anordnung der Antriebsschraube hat diese beispielsweise an ihrem einstellkeilfernen Ende einen vorzugsweise flanschartig umlaufenden radialen Vorsprung, der in einen radialen Rücksprung in der Ausnehmung eingreift. Der radiale Rücksprung kann grundsätzlich als ein ebenfalls umlaufender Freistich ausgebildet sein. Es genügt aber, wenn der Rücksprung als ein Freistich ausgebildet ist, der zumindest soweit um die Ausnehmung läuft, dass der für die axialfeste Anordnung erforderliche Eingriff des radialen Vorsprungs der Antriebsschraube gewährleistet wird.

Die Betätigung der Antriebsschraube gelingt besonders einfach über einen in die jeweilige Ausnehmung mündenden Durchgriff in der Werkzeugkassette. Dieser Durchgriff erstreckt sich vorteilhaft von derjenigen Seite der Werkzeugkassette her in Richtung der Ausnehmung, die in einem Zustand, in dem die Werkzeugkassette an ein Zerspanungswerkzeug montiert ist, außen liegt.

Die Antriebsschraube ist bevorzugte als eine Hohlschraube mit einer innenliegenden Werkzeugschlüsselaufnahme, z. B. Innensechskant, Torxaufnahme, oder dergleichen, ausgebildet ist, wobei es sich im Hinblick auf die Kraftübertragung als besonders vorteilhaft herausgestellt hat, wenn die Werkzeugschlüsselaufnahme sich in dem im Einstellkeil befindlichen Gewindeabschnitt der Antriebsschraube ausgebildet ist.

In einer bevorzugten Ausführung umfasst die Einstellvorrichtung wenigstens zwei in Richtung der Längsmittelachse des Trägerkörpers voneinander beabstandet angeordnete, radial wirkende Einstellkeile, die eine Einstellung der radialen Lage sowie der Winkellage der Werkzeugkassette relativ zur Längsmittelachse ermöglichen, sowie einen axial wirkenden Einstellkeil, der eine Einstellung der axialen Lage der Werkzeugkassette ermöglicht.

Die beiden radial wirkenden Einstellkeile sind vorteilhaft jeweils entlang einer definierten Verschiebeachse verschiebbar, die in einer Querschnittsebene des Trägerkörpers liegt. Gleichermaßen ist der axial wirkende Einstellkeil vorteilhaft entlang einer definierten Verschiebeachse verschiebbar, die in einer Längsschnittebene des Trägerkörpers liegt. Durch die beiden radial wirkenden Einstellkeile und den axial wirkenden Einstellkeil ist die Werkzeugkassette im Werkzeugkassettensitz in einer statisch eindeutig bestimmten Lage fixierbar. Denn die beiden radial wirkenden Einstellkeile und der axial wirkende Einstellkeil ermöglichen eine Anlage der Werkzeugkassette in axialer und radialer Richtung im Werkzeugkassettensitz relativ zur Werkzeugachse in der Art einer 3-Punkt-Anlage.

Wenn die beiden radial wirkenden Einstellkeile einerseits und der axial wirkende Einstellkeil andererseits so angeordnet sind, dass sie von verschiedenen Seiten, z. B. der Oberseite und der äußeren Längsseite der Werkzeugkassette, aus betätigbar sind, lässt sich die Werkzeugkassette kompakt und in Richtung der Längsmittelachse des Trägerkörpers betracht kurz ausbilden, ohne die Betätigung der Einstellmittel zu beeinträchtigen.

Der Schneideinsatz kann seinerseits in der Aufnahmetasche der Werkzeugkasssette lageeinstellbar oder lageunveränderlich angeordnet sein. Eine lageunverändliche Anordnung des Schneideinsatzes an der Werkzeugkassette ist besonders einfach zu realisieren. Eine lageeinstellbare Anordnung des Schneideinsatzes an der Werkzeugkassette ermöglicht eine zweistufige Lageeinstellung der durch den Schneideinsatz gebildeten Haupt- und/oder Nebenschneide(n) relativ zur Längsmittelachse des Trägerkörpers. Beispielsweise lässt sich über eine Verstellung der Werkzeugkassette relativ zur Längsmittelachse des Trägerkörpers in einer ersten Stufe eine Grobeinstellung und über eine Verstellung des Schneideinsatzes relativ zur Werkzeugkassette in einer zweiten Stufe eine Feineinstellung der Haupt- und/oder Nebenschneide(n) durchführen.

Der Schneideinsatz kann von einer Wechsel- oder Wendeschneidplatte gebildet sein.

Bei dem mit der erfindungsgemäßen Werkzeugkassette bestückten Trägerkörper handelt es sich um einen Funktionsabschnitt eines Zerspanungswerkzeugs, z. B. einer Bohrstange, eines Bohrers, eines Stufenbohrers, einer Reibahle, eines Fräsers, etc.. Das Zerspanungswerkzeug ist bevorzugt ein drehangetriebenes Werkzeug. Die den Werkzeugkassettensitz begrenzenden Boden- und Seitenwände können zumindest in den Wandbereichen, in denen die Werkzeugkassette über die Einstellvorrichtung abgestützt ist, aus ebenen Flächen gebildet sein, die rechtwinklig aufeinander stehen.

Die Erfindung wird im Folgenden am Beispiel einer sich aus den Fig. 1 bis 7 ergebenden Ausführungsform ausführlicher beschrieben.
Fig. 1 zeigt eine Seitenansicht des vorderen Teils einer mit einer erfindungsgemäßen Werkzeugkassette bestückten Bohrstange.
Fig. 2 zeigt eine axiale Draufsicht der Bohrstange.
Fig. 3 zeigt eine Seitenansicht des vorderen Teils der Bohrstange in einer um 90° um eine Längsmittelachse der Bohrstange gedrehten Lage.
Fig. 4 bis 6 zeigen verschiedene Schnitte der Bohrstange, wobei Fig. 4 einen in Fig. 1 angegebenen Schnitt C-C, Fig. 5 einen in Fig. 1 angegebenen Schnitt A-A und Fig. 6 einen in Fig. 3 angegebenen Schnitt B-B zeigt.
Fig. 7 zeigt schematisch eine perspektivische Seiten- oder Untersicht der von der Bohrstange isolierten erfindungsgemäßen Werkzeugkassette mit Blickrichtung auf eine Einstellvorrichtung.

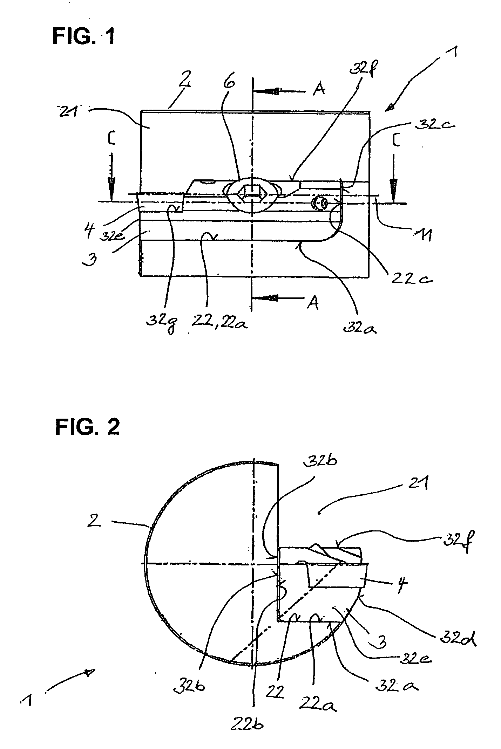

In Fig. 1 bis 6 ist im Besonderen der vordere Teil eines drehangetriebenen Zerspanungswerkzeugs 1 dargestellt, das in der gezeigten Ausführungsform als eine Bohrstange ausgebildet ist. Die Bohrstange 1 weist einen sich entlang einer Dreh- oder Längsmittelachse 11 erstreckenden Trägerkörper 2 und eine Werkzeugkassette 3 mit Schneideinsatz 4 auf, die über eine Einstellvorrichtung 5 einstellbar und mittels einer Klemmschraube 6 am Trägerkörper 2 fixierbar angeordnet ist.

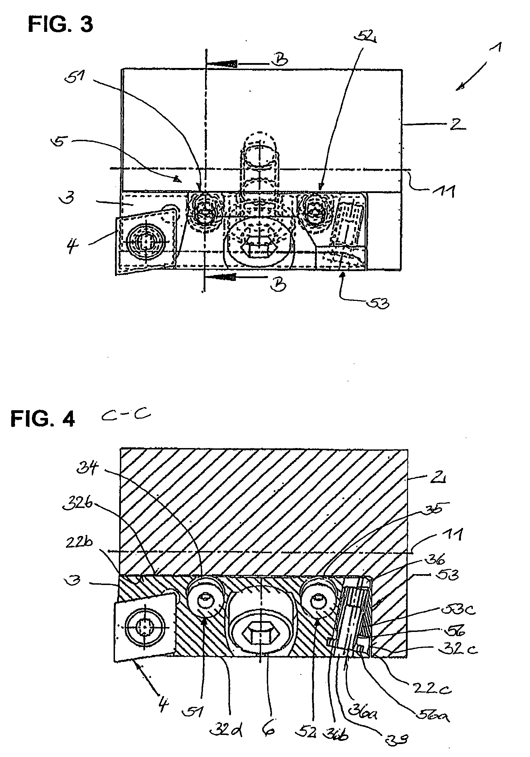

Der Trägerkörper 2 kann sich in an sich bekannter Weise in Fig. 1 und 3 nach rechts in einen (nicht gezeigten) Einspannschaft fortsetzen. Der Trägerkörper 2, der damit einen Funktionsabschnitt des Zerspanungswerkzeugs 1 bildet, hat an seinem vorderen Ende einen im Bereich eines Spanraums 21 eingearbeiteten Werkzeugkassettensitz 22, in dem die Werkzeugkassette 3 angeordnet ist. Der Werkzeugkassettensitz 22 ist im Besonderen als eine umfangs- und stirnseitig offene Vertiefung oder Ausnehmung im Spanflächenbereich des Spanraums 21 des Trägerkörpers 2 ausgebildet. Die den Werkzeugkassettensitz 22 bildende Vertiefung oder Ausnehmung ist, wie sich aus den Fig. 1 bis 6 ergibt, als eine in einer Querschnittsebene (bezogen auf die Längsmittelachse 11) rechtwinklige Vertiefung oder Ausnehmung ausgebildet, die in Schnittrichtung von einer Bodenwand 22a und in axialer und radialer Richtung von jeweils einer Seitenwand 22b, 22c begrenzt ist. Die Seitenwand 22c geht, wie sich aus Fig. 1 ergibt, aus fertigungstechnischen Gründen über eine Eckrundung in die Bodenwand 22a des Kassettensitzes 22 über. Nichtsdestoweniger sind die Boden- und Seitenwände 22b, 22c in den Wandbereichen, in denen die Werkzeugkassette 3 über die Einstellvorrichtung 5 abgestützt ist, aus ebenen Flächen gebildet, die rechtwinklig aufeinander stehen. Der Kassettensitz 22 wird beispielsweise mit Hilfe eines entlang der Längsmittelachse 11 geführten Fräswerkzeugs mit einer quer zur Längsmittelachse 11 orientierten Drehachse ausgebildet, wodurch sich die oben erwähnte Eckrundung ergibt.

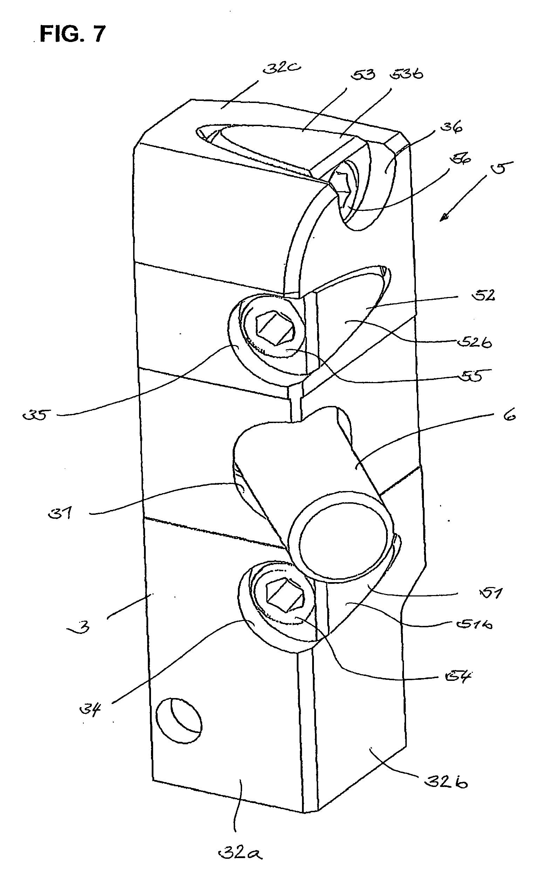

Die Werkzeugkassette 3 ist mittels der Klemmschraube 6, die durch eine die Werkzeugkassette 3 durchsetzende Bohrung 31 geführt und in eine Gewindebohrung 23 im Trägerkörper 2 eingeschraubt ist, und die im Folgenden noch näher zu erläuternde Einstellvorrichtung 5 (siehe Fig. 7) durch das Zusammenwirken mit den den Werkzeugkassettensitz 22 begrenzenden Seitenwänden 22b, 22c in ihrer radialen Lage, axialen Lage und/oder Winkellage relativ zur Längsmittelachse 11 im Werkzeugkassettensitz 22 lagebestimmt fixierbar. Die Achse 23 der Klemmschraube bzw. der Gewindebohrung 23 verläuft im Wesentlichen diagonal von einer Oberseite 32d der Werkzeugkassette 3 in Richtung der durch eine Bodenseite 32a und eine innere Längsseite 32b der Werkzeugkassette 3 gebildete Eckkante, wodurch sichergestellt ist, dass die Werkzeugkassette 3 bei angezogener Klemmschraube 6 in Richtung der durch die Boden- und Seitenwände 22a, 22b des Kassettensitzes 2 gebildeten Ecke gedrückt wird.

Die Einstellvorrichtung 5 ist (herausnehmbar) in die Werkzeugkassette 3 integriert, d. h. werkzeugkassettenseitig angeordnet. Über die Einstellvorrichtung 5 kann der Schneideinsatz 4 mittelbar über die Werkzeugkassette 3 gegenüber dem Trägerkörper 2 radial und axial verstellt werden, um die Lage der Haupt- und Nebenschneiden des Schneideinsatzes 4 einzustellen. Die Einstellvorrichtung 5 wirkt daher von der Werkzeugkassette 3 zum Trägerkörper 2 hin und zwar dergestalt, dass sie einen Druck gegen die Seitenwände 22b, 22c des Werkzeugkassettensitzes 22 ausübt, um eine Lageeinstellung der Werkzeugkassette 3 zu bewirken.

Die Werkzeugkassette 3 ist aus einem im Wesentlichen quaderförmigen Körper gebildet, wie sich aus Fig. 7 ergibt. Die Werkzeugkassette 3 hat eine Oberseite 32f, in der eine Aufnahmetasche 32g für den Schneideinsatz 4 ausgebildet ist, eine gegenüberliegende Unter- oder Bodenseite 32a zur Abstützung an der Bodenwand 22a des Werkzeugkassettensitzes 22 sowie eine äußere und innere Längsseite 32b, 32d und eine vordere und hintere Stirnseite 32e, 32c. In dem in Fig. 1 bis 6 gezeigten Zustand, in dem die Werkzeugkassette 3 am Trägerkörper 2 angebracht ist, liegen die innere Längsseite 32b und die hintere Stirnseite 32c jeweils in einem durch die Einstellvorrichtung 5 definierten Einstellabstand einer Seitenwand 22b, 22c des Werkzeugkassettensitzes 2 gegenüber, während die äußere Längsseite 32d und die vordere Stirnseite 32e jeweils freiliegen.

Die Werkzeugkassette 3 sitzt flächig auf der Bodenwand 22a des Werkzeugkassettensitzes 22 und ist über die Einstellvorrichtung 5 an den beiden Seitenwänden 22b, 22c des Werkzeugkassettensitzes 22 und damit am Trägerkörper 2 lagebestimmt abgestützt. Die Fixierung der Werkzeugkassette 3 im Werkzeugkassettensitz 22 bzw. am Trägerkörper 2 erfolgt nach vorgenommener Lageeinstellung mit Hilfe der Klemmschraube 6. Zum Zweck der Lageeinstellung wird die Werkzeugkassette 3 zunächst mit Hilfe der Klemmschraube 6 im Werkzeugkassettensitz 22 locker befestigt. In diesem Zustand kann dann die gewünschte Lageeinstellung der Werkzeugkassette 3 mittels der Einstellvorrichtung 5 durchgeführt werden. Anschließend wird die Werkzeugkassette 3 mit Hilfe der Klemmschraube 6 in der so eingestellten Lage fixiert.

In der in den Figuren gezeigten Ausführungsform weist die Einstellvorrichtung 5 drei Einstellkeile 51, 52, 53 auf, im Besonderen zwei in Richtung der Längsmittelachse 11 des Trägerkörpers 2 voneinander beabstandet angeordnete, radial wirkende Einstellkeile 51, 52, die eine Einstellung der radialen Lage sowie der Winkellage der Werkzeugkassette 3 relativ zur Längsmittelachse 11 ermöglichen, sowie einen axial wirkenden Einstellkeil 53, der eine Einstellung der axialen Lage der Werkzeugkassette 3 am Trägerkörper 2 ermöglicht.

Die drei Einstellkeile 51, 52, 53 sind jeweils entlang einer definierten Verschiebeachse 34a, 35a, 36a in einer an der Werkzeugkassette 3 ausgebildeten Führung 34, 35, 36 verschiebbar angeordnet und über eine Keilfläche 51 b, 52b, 53b mit einer jeweils gegenüberliegenden Seitenwand 22b, 22c des Werkzeugkassettensitzes 22 zusammenwirken. Die Keilflächen 51b, 52b, 53b der Einstellkeile 51, 52, 53 und die jeweils gegenüberliegenden Seitenwände 22b, 22c des Werkzeugkassettensitzes 22 bilden ein Keilgetriebe, das eine feine Lageeinstellung der Werkzeugkassette 3 im Werkzeugkassettensitz 22 ermöglicht.

Die Keilflächen 51b, 52b, 53b der Einstellkeile 51, 52, 53 sind jeweils von einer ebenen Fläche gebildet, die an der jeweils gegenüberliegenden Seitenwand 22b, 22c des Werkzeugkassettensitzes 22 flächig anliegt.

Die Führungen 34, 35, 36 sind jeweils von einer im Querschnitt kreiszylindrischen Ausnehmung in Form einer (Sackloch-)Bohrung gebildet, die sich entlang der jeweiligen Verschiebeachse 34a, 35a, 36a erstreckt und an derjenigen Seite 32b, 32c der Werkzeugkassette 3 unter einem spitzen Winkel austritt, die der jeweils gegenüberliegenden Seitenwand 22b, 22c des Werkzeugkassettensitzes 22 zugewandt ist. Dadurch werden an diesen Seiten Öffnungen geschaffen (vgl. Fig. 7), aus denen die Einstellkeile 51, 52, 53 aus dem im Wesentlichen quaderförmigen Umriss der Werkzeugkassette 3 hervortreten können.

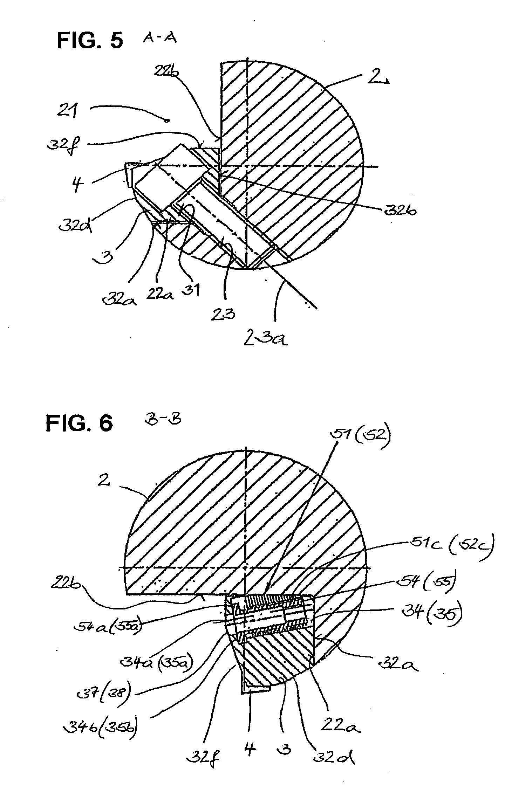

Im Besonderen sind die beiden radial wirkenden Einstellkeile 51, 52 jeweils in einer Ausnehmung 34, 35 angeordnet, die in einer Querschnittsebene des Trägerkörpers 2 liegt (vgl. Fig. 6), während der axial wirkende Einstellkeil 53 in einer Ausnehmung 36 angeordnet ist, die in einer Längsschnittebene des Trägerkörpers 2 liegt (vgl. Fig. 4). Durch die beiden radial wirkenden Einstellkeile 51, 52 und den axial wirkenden Einstellkeil 53 ist die Werkzeugkassette 3 in einer statisch eindeutig bestimmten Lage fixierbar.

Die Einstellkeile 51, 52, 53 sind, wie sich aus den Fig. 4 und 6 ergibt, jeweils aus einem in der jeweiligen Ausnehmung 34, 35, 36 aufgenommenen Hülsenkörper gebildet, der mit Ausnahme der Keilfläche 51 b, 52b, 53b eine in Richtung der Verschiebeachse 34a, 35a, 36a verlaufende zylindrische Mantelfläche hat. Die zylindrische Mantelfläche stellt eine formschlüssige Anordnung des Hülsenkörpers in der jeweiligen Ausnehmung 34, 35, 36 sicher.

Die Hülsenkörper weisen des Weiteren jeweils eine parallel zur Verschiebeachse 34a, 35a, 36a verlaufende, aber außermittig angeordnete Innengewindebohrung 51c, 52c, 53c auf, in die eine in der jeweiligen Ausnehmung 34, 35, 36 axialfest, aber drehbeweglich gehaltene Antriebsschraube 54, 55, 56 eingeschraubt ist. Zur axialfesten Verankerung haben die Antriebsschrauben 54, 55, 56 an ihren einstellkeilfernen Enden jeweils einen flanschartig umlaufenden radialen Vorsprung 54a, 55a, 56a, der in einen radialen Rücksprung 34b, 35b, 36b der jeweiligen Ausnehmung 34, 35, 36 eingreift. Der radiale Rücksprung 34b, 35b, 36b ist als ein teilweise umlaufender radialer Freistich ausgebildet.

Durch die Verankerung der Antriebschrauben 54, 55, 56 sind die Einstellkeile 51, 52, 53 in der jeweiligen Führungsausnehmung 34, 35, 36 verliersicher angeordnet. Durch die außermittige Anordnung der Antriebschrauben 54, 55, 56 sind darüber hinaus die Einstellkeile 51, 52, 53 in der jeweiligen Führungsausnehmung 34, 35, 36 gegen eine Verdrehen gesichert.

Die Antriebsschrauben 54, 55, 56 sind jeweils als eine Hohlschraube mit einer innenliegenden Werkzeugschlüsselaufnahme, z. B. Innensechskant, Torxaufnahme, oder dergleichen, ausgebildet. Die Werkzeugschlüsselaufnahme ist dabei in dem im Einstellkeil 51, 52, 53 befindlichen Gewindeabschnitt ausgebildet.

Zur Betätigung der Antriebsschrauben 54, 55, 56 weist die Werkzeugkassette 3 ferner Durchgriffe 37, 38, 39 auf, die in die jeweilige Ausnehmung 34, 35, 36 münden. Die Durchgriffe 37, 38 einerseits und der Durchgriff 39 erstrecken sich jeweils von außen von verschiedenen Seiten der Werkzeugkassette 3 her in Richtung der Ausnehmung 34, 35, 36. Die beiden radial wirkenden Einstellkeile 51, 52 und der radial wirkende Einstellkeil 53 sind daher so angeordnet, dass sie von verschiedenen Seiten her, im Besonderen von der Oberseite 32f bzw. der äußeren Längsseite 32d der Werkzeugkassette 3, aus betätigbar sind.

Der Schneideinsatz 4 ist von einer Wendeschneidplatte gebildet. Die Wendeschneidplatte besteht vorzugsweise aus einem harten und verschleißfesten Werkstoff, wie z.B. aus Hartmetall (HM), Polykristallinem Diamant (PKD), Kubischem Bornidrid (CBN), Cermet, Keramik oder einem sonstigen Hartstoff, und kann beschichtet sein.

Der Schneidsatz 4 ist in der Aufnahmetasche 32g der Werkzeugkasssette 3 lageunveränderlich angeordnet. In einer Abwandlung der oben beschriebenen Ausführungsform kann der Schneideinsatz 4 seinerseits in der Aufnahmetasche 32g der Werkzeugkassette 3 über eine geeignete Einstellvorrichtung lageeinstellbar angeordnet sein.

## Patentansprüche

1. Werkzeugkassette (3) mit einer Aufnahmetasche zur Aufnahme eines Schneideinsatzes (4), die mittels einer Klemmschraube (6), die durch eine die Werkzeugkassette (3) durchsetzende Bohrung (31) geführt ist, in einem Werkzeugkassettensitz (22) eines Trägerkörpers (2) eines Zerspanungswerkzeugs (1) lageeinstellbar fixierbar ist, mit:
einer in die Werkzeugkassette (3) integrierten Einsteilvorrichtung (5) zur Einstellung der radialen Lage, axialen Lage und/oder Winkellage der Werkzeugkassette (3) relativ zu einer Längsmittelachse (11) des Trägerkörpers (2) durch Zusammenwirken mit einer oder mehreren den Werkzeugkassettensitz (22) begrenzenden Seitenwänden (22b, 22c) des Trägerkörpers (2),
wobei die Einsteilvorrichtung (5) einen oder mehrere Einstellkeile (51 , 52, 53) aufweist, die jeweils entlang einer definierten Verschiebeachse (34a, 35a, 36a) in einer an der Werkzeugkassette (3) ausgebildeten Führung (34, 35, 36) verschiebbar angeordnet sind und über eine Keilfläche (51 b, 52b, 53b) mit einer jeweils gegenüberliegenden Seitenwand (22b, 22c) des Werkzeugkassettensitzes (22) zusammenwirken, **dadurch gekennzeichnet, dass**
die Führung (34, 35, 36) von einer zylindrischen Ausnehmung gebildet ist, in der der jeweilige Einstellkeil (51 , 52, 53) entlang der definierten Verschiebeachse (34a, 35a, 36a) verschiebbar aufgenommen ist und die die der jeweils gegenüberliegenden Seitenwand (22b, 22c) des Werkzeugkassettensitzes (22) zugewandte Seite (32b, 32c) der Werkzeugkassette (3) unter einem spitzen Winkel dergestalt schneidet, dass eine Öffnung ausgebildet ist, die die Keilfläche (51 b, 52b, 53b) des Einstellkeils (51 , 52, 53) freigibt, und
der Einstellkeil (51 , 52, 53) aus einem in der Ausnehmung (34, 35, 36) aufgenommenen Hülsenkörper gebildet ist, der mit Ausnahme der Keilfläche (51b, 52b, 53b) eine in Richtung der Verschiebeachse (34a, 35a, 36a) verlaufende zylindrische Mantelfläche hat.

2. Werkzeugkassette (3) nach Anspruch 1, **dadurch gekennzeichnet, dass** die Keilfläche (51 b, 52b, 53b) von einer ebenen Fläche gebildet ist, die an der jeweils gegenüberliegenden Seitenwand (22b, 22c) des Werkzeugkassettensitzes (22) flächig anliegt.

3. Werkzeugkassette (3) nach Anspruch 1 oder 2, **dadurch gekennzeichnet, dass** der Hülsenkörper eine parallel zur Verschiebeachse (34a, 35a, 36a) verlaufende, außermittig angeordnete Innengewindebohrung (51c, 52c, 53c) hat, in die eine in der Ausnehmung (34, 35, 36) axialfest, aber drehbeweglich gehaltene Antriebsschraube (54, 55, 56) eingeschraubt ist.

4. Werkzeugkassette (3) nach Anspruch 3, **dadurch gekennzeichnet, dass** die Antriebsschraube (54, 55, 56) einen radialen Vorsprung (54a, 55a, 56a) aufweist, der in einen radialen Rücksprung (34b, 35b, 36b) in der Ausnehmung (34, 35, 36) eingreift.

5. Werkzeugkassette (3) nach Anspruch 3 oder 4, **dadurch gekennzeichnet, dass** die Antriebsschraube (54, 55, 56) über einen in die Ausnehmung (34, 35, 36) mündenden Durchgriff (37, 38, 39) in der Werkzeugkassette (3) von einer in Richtung der Verschiebeachse (34a, 35a, 36a) vom Einstellkeil (51 , 52, 53) fernen Seite der Werkzeugkassette (3) her, die in einem an ein Zerspanungswerkzeug montierten Zustand außen liegt, betätigbar ist.

6. Werkzeugkassette (3) nach einem der Ansprüche 3 bis 5, **dadurch gekennzeichnet, dass** die Antriebsschraube (54, 55, 56) als eine Hohlschraube mit einer innenliegenden Werkzeugschlüsselaufnahme ausgebildet ist, die in einem im Einstellkeil (51 , 52, 53) befindlichen Gewindeabschnitt der Antriebsschraube (54, 55, 56) vorgesehen ist.

7. Werkzeugkassette (3) nach einem der Ansprüche 1 bis 6, **dadurch gekennzeichnet, dass** die Einsteilvorrichtung (5) zwei in Richtung der Längsmittelachse (11) des Trägerkörpers (2) voneinander beabstandet angeordnete, radial wirkende Einstellkeile (51, 52), die eine Einstellung der radialen Lage sowie der Winkellage der Werkzeugkassette (3) relativ zur Längsmittelachse (11) ermöglichen, sowie einen axial wirkenden Einstellkeil (53), der eine Einstellung der axialen Lage der Werkzeugkassette (3) ermöglicht, aufweist.

8. Werkzeugkassette (3) nach Anspruch 7, **dadurch gekennzeichnet, dass** die beiden radial wirkenden Einstellkeile (51, 52) jeweils entlang einer definierten Verschiebeachse (34a, 35a) verschiebbar sind, die in einer Querschnittsebene des Trägerkörpers (2) liegt.

9. Werkzeugkassette (3) nach Anspruch 7 oder 8, **dadurch gekennzeichnet, dass** der axial wirkende Einstellkeil (53) entlang einer definierten Verschiebeachse (36a) verschiebbar ist, die in einer Längsschnittebene des Trägerkörpers (2) liegt.

10. Werkzeugkassette (3) nach einem der Ansprüche 7 bis 9, **dadurch gekennzeichnet, dass** die radial wirkenden Einstellkeile (51, 52) einerseits und der axial wirkende Einstellkeil (53) andererseits von verschiedenen Seiten der Werkzeugkassette (3) aus betätigbar sind.

11. Werkzeugkassette (3) nach einem der vorhergehenden Ansprüche, **dadurch gekennzeichnet, dass** der Schneideinsatz (4) in einer an der Werkzeugkassette (3) ausgebildeten Aufnahmetasche lageunveränderlich fixiert ist.

12. Zerspanungswerkzeug (1), **gekennzeichnet durch** eine Werkzeugkassette (3) nach einem der vorhergehenden Ansprüche, wobei die den Werkzeugkassettensitz (22) begrenzenden Boden- und Seitenwände (22a, 22b) zumindest in den Wandbereichen, in denen die Werkzeugkassette (3) über die Einstellvorrichtung (5) abgestützt ist, aus rechtwinklig angeordneten, ebenen Flächen gebildet ist.

## Claims

1. Tool cassette (3) having a receiving pocket for receiving a cutting insert (4) which, by means of a clamping screw (6) which extends through a hole (31) which extends through the tool cassette (3), can be fixed in a positionally adjustable manner in a tool cassette seat (22) of a carrier member (2) of a cutting tool (1), having:
an adjustment device (5) which is integrated in the tool cassette (3) for adjusting the radial position, axial position and/or angular position of the tool cassette (3) relative to a longitudinal centre axis (11) of the carrier member (2), by means of cooperation with one or more side walls (22b, 22c) of the carrier member (2) delimiting the tool cassette seat (22),
wherein the adjustment device (5) has one or more adjustment wedges (51, 52, 53) which are each arranged displaceably along a defined displacement axis (34a, 35a, 36a) in a guide (34, 35, 36) which is formed on the tool cassette (3) and which cooperate by means of a wedge face (51b, 52b, 53b) with a facing side wall (22b, 22c) of the tool cassette seat (22),
**characterised in that**
the guide (34, 35, 36) is formed by a cylindrical recess in which the respective adjustment wedge (51, 52, 53) is displaceably received along the defined displacement axis (34a, 35a, 36a) and which intersects with the side (32b, 32c) of the tool cassette (3) facing the opposing side wall (22b, 22c) of the tool cassette seat (22) at an acute angle in such a manner that there is formed an opening which releases the wedge face (51b, 52b, 53b) of the adjustment wedge (51, 52, 53) and
the adjustment wedge (51, 52, 53) is formed by a sleeve member which is received in the recess (34, 35, 36) and which with the exception of the wedge face (51b, 52b, 53b) has a cylindrical covering face which extends in the direction of the displacement axis (34a, 35a, 36a).

2. Tool cassette (3) according to claim 1, **characterised in that** the wedge face (51b, 52b, 53b) is formed by a level face which is in planar abutment with the opposing side wall (22b, 22c) of the tool cassette seat (22) in each case.

3. Tool cassette (3) according to claim 1 or claim 2, **characterised in that** the sleeve member has an eccentrically arranged inner threaded hole (51c, 52c, 53c) which extends parallel with the displacement axis (34a, 35a, 36a) and in which a drive screw (54, 55, 56) which is retained in the recess (34, 35, 36) in an axially secure but rotationally movable manner is screwed.

4. Tool cassette (3) according to claim 3, **characterised in that** the drive screw (54, 55, 56) has a radial projection (54a, 55a, 56a) which engages in a radial recess (34b, 35b, 36b) in the recess (34, 35, 36).

5. Tool cassette (3) according to claim 3 or claim 4, **characterised in that** the drive screw (54, 55, 56) can be actuated by means of an aperture (37, 38, 39) which opens in the recess (34, 35, 36) in the tool cassette (3) from a side of the tool cassette (3) remote from the adjustment wedge (51, 52, 53) in the direction of the displacement axis (34a, 35a, 36a), which tool cassette is located in a state mounted on a cutting tool at the outer side.

6. Tool cassette (3) according to any one of claims 3 to 5, **characterised in that** the drive screw (54, 55, 56) is constructed as a hollow screw with an internal tool key receiving member which is provided in a threaded portion of the drive screw (54, 55, 56) which is located in the adjustment wedge (51, 52, 53).

7. Tool cassette (3) according to any one of claims 1 to 6, **characterised in that** the adjustment device (5) has two radially acting adjustment wedges (51, 52) which are arranged spaced apart from each other in the direction of the longitudinal centre axis (11) of the carrier member (2) and which enable an adjustment of the radial position and the angular position of the tool cassette (3) relative to the longitudinal centre axis (11), and an axially acting adjustment wedge (53) which enables an adjustment of the axial position of the tool cassette (3).

8. Tool cassette (3) according to claim 7, **characterised in that** the two radially acting adjustment wedges (51, 52) can each be displaced along a defined displacement axis (34a, 35a) which is located in a cross-sectional plane of the carrier member (2).

9. Tool cassette (3) according to claim 7 or claim 8, **characterised in that** the axially acting adjustment wedge (53) can be displaced along a defined displacement axis (36a) which is located in a longitudinal sectional plane of the carrier member (2).

10. Tool cassette (3) according to any one of claims 7 to 9, **characterised in that** the radially acting adjustment wedges (51, 52) at one side and the axially acting adjustment wedge (53) at the other side can be actuated from different sides of the tool cassette (3).

11. Tool cassette (3) according to any one of the preceding claims, **characterised in that** the cutting insert (4) is fixed so as to be invariable in terms of position in a receiving pocket which is formed in the tool cassette (3).

12. Cutting tool (1), **characterised by** a tool cassette (3) according to any one of the preceding claims, wherein the base and side walls (22a, 22b) which delimit the tool cassette seat (22) are formed by planar faces which are arranged at right angles at least in the wall regions in which the tool cassette (3) is supported by means of the adjustment device (5).

## Revendications

1. Cassette d'outil (3) avec une poche de réception pour la réception d'un insert de coupe (4) qui peut être fixé tout en réglant la position à l'aide d'une vis de serrage (6) qui est guidée par un perçage traversant la cassette d'outil (3) dans un siège de cassette d'outil (22) d'un corps porteur (2) d'un outil d'enlèvement de copeaux (1), présentant :
un dispositif de réglage (5) intégré dans la cassette d'outil (3) pour le réglage de la position radiale, axiale et/ou la position angulaire de la cassette d'outil (3) par rapport à un axe médian longitudinal (11) du corps porteur (2) par coopération avec une ou plusieurs parois latérales (22b, 22c) délimitant le siège de cassette d'outil (22) du corps porteur (2),
le dispositif de réglage (5) présentant un ou plusieurs coins de réglage (51, 52, 53), qui sont agencés de manière mobile respectivement le long d'un axe de déplacement défini (34a, 35a, 36a) dans un guidage (34, 35, 36) réalisé sur la cassette d'outil (3) et coagissent par le biais d'une surface de coin (51b, 52b, 53b) avec une paroi latérale (22b, 22c) respectivement opposée du siège de cassette d'outil (22), **caractérisée en ce que**
le guidage (34, 35, 36) est formé par un évidement cylindrique, dans lequel le coin de réglage respectif (51, 52, 53) est reçu de manière mobile le long de l'axe de déplacement défini (34a, 35a, 36a) et qui coupe le côté (32b, 32c) tourné vers la paroi latérale (22b, 22c) respectivement opposée du siège de cassette d'outil (22) de la cassette d'outil (3) selon un angle aigu de telle manière qu'une ouverture soit réalisée, laquelle libère la surface de coin (51b, 52b, 53b) du coin de réglage (51, 52, 53), et
le coin de réglage (51, 52, 53) est formé par un corps de douille reçu dans l'évidement (34, 35, 36) qui présente, à l'exception de la surface de coin (51b, 52b, 53b), une surface enveloppe cylindrique s'étendant en direction de l'axe de déplacement (34a, 35a, 36a).

2. Cassette d'outil (3) selon la revendication 1, **caractérisée en ce que** la surface de coin (51b, 52b, 53b) est formée par une surface plane qui repose sur la surface sur la paroi latérale (22b, 22c) respectivement opposée du siège de cassette d'outil (22).

3. Cassette d'outil (3) selon la revendication 1 ou 2, **caractérisée en ce que** le corps de douille a un perçage de filetage intérieur (51c, 52c, 53c) agencé de manière excentrée, s'étendant parallèlement à l'axe de déplacement (34a, 35a, 36a), dans lequel une vis d'entraînement (54, 55, 56) maintenue de manière fixe axialement mais mobile en rotation dans l'évidement (34, 35, 36) est vissée.

4. Cassette d'outil (3) selon la revendication 3, **caractérisée en ce que** la vis d'entraînement (54, 55, 56) présente une saillie radiale (54a, 55a, 56a) qui s'engage dans un épaulement radial (34b, 35b, 36b) dans l'évidement (34, 35, 36).

5. Cassette d'outil (3) selon la revendication 3 ou 4, **caractérisée en ce que** la vis d'entraînement (54, 55, 56) peut être actionnée par un passage (37, 38, 39) débouchant dans l'évidement (34, 35, 36) dans la cassette d'outil (3) depuis un côté éloigné du coin de réglage (51, 52, 53) en direction de l'axe de déplacement (34a, 35a, 36a) de la cassette d'outil (3), qui se trouve à l'extérieur dans un état monté sur un outil d'enlèvement de copeaux.

6. Cassette d'outil (3) selon l'une quelconque des revendications 3 à 5, **caractérisée en ce que** la vis d'entraînement (54, 55, 56) est réalisée comme une vis creuse avec un logement de clé d'outil intérieur qui est prévu dans une section de filetage se trouvant dans le coin de réglage (51, 52, 53) de la vis d'entraînement (54, 55, 56).

7. Cassette d'outil (3) selon l'une quelconque de revendications 1 à 6, **caractérisée en ce que** le dispositif de réglage (5) présente deux coins de réglage (51, 52) agissant radialement, agencés à distance l'un de l'autre en direction de l'axe médian longitudinal (11) du corps porteur (2), qui permettent un réglage de la position radiale ainsi que de la position angulaire de la cassette d'outil (3) par rapport à l'axe médian longitudinal (11), ainsi qu'un coin de réglage (53) agissant axialement qui permet un réglage de la position axiale de la cassette d'outil (3) .

8. Cassette d'outil (3) selon la revendication 7, **caractérisée en ce que** les deux coins de réglage (51, 52) agissant radialement sont mobiles respectivement le long d'un axe de déplacement (34a, 35a) défini qui se trouve dans un plan de section du corps porteur (2).

9. Cassette d'outil (3) selon la revendication 7 ou 8, **caractérisée en ce que** le coin de réglage agissant radialement (53) est mobile le long d'un axe de déplacement (36a) défini qui se trouve dans un plan de coupe longitudinal du corps porteur (2).

10. Cassette d'outil (3) selon l'une quelconque des revendications 7 à 9, **caractérisée en ce que** les coins de réglage agissant radialement (51, 52) d'une part et le coin de réglage agissant axialement (53) d'autre part peuvent être actionnés depuis différents côtés de la cassette d'outil (3).

11. Cassette d'outil (3) selon l'une quelconque des revendications précédentes, **caractérisée en ce que** l'insert de coupe (4) est fixé dans une position invariable dans une poche de réception réalisée sur la cassette d'outil (3) .

12. Outil d'enlèvement de copeaux (1), **caractérisé par** une cassette d'outil (3) selon l'une quelconque des revendications précédentes, les parois inférieure et latérales (22a, 22b) délimitant le siège de cassette d'outil (22) étant formées au moins dans les zones de paroi dans lesquelles la cassette d'outil (3) est en appui par le biais du dispositif de réglage (5) de surfaces planes, agencées à angle droit.
